# EUROPÄISCHE PATENTSCHRIFT

(11) **EP 4 133 194 B1**
(45) Veröffentlichungstag und Bekanntmachung des Hinweises auf die Patenterteilung: **22.05.2024**
(21) Anmeldenummer: 21718084.3
(22) Anmeldetag: 07.04.2021
(51) Int. Cl.: F16J 15/16, F16J 15/3204, F16J 15/3208, F16C 33/78, F16J 15/3268, F16J 15/3276, F16J 15/34

(54) **DICHTUNGSANORDNUNG MIT DICHTUNGSEINHEIT**
SEAL ASSEMBLY WITH SEAL UNIT
ENSEMBLE JOINT D'ÉTANCHÉITÉ AVEC UNITÉ D'ÉTANCHÉITÉ

(30) Priorität: 07.04.2020 DE 102020204514
(43) Veröffentlichungstag der Anmeldung: 15.02.2023
(73) Patentinhaber: Trelleborg Sealing Solutions Germany GmbH, 70565 Stuttgart (DE)
(72) Erfinder: WALZ, Alexander, 70190 Stuttgart (DE); KOLODZIEJ, Jan, 70736 Fellbach (DE)
(74) Vertreter: Kohler Schmid Möbus Patentanwälte
(86) Internationale Anmeldenummer: PCT/EP2021/059053
(87) Internationale Veröffentlichungsnummer: WO 2021/204871

(56) Entgegenhaltungen:
- US-A- 4 376 541
- US-A- 5 183 269
- US-A- 5 269 536

## Beschreibung

Die Erfindung betrifft eine Dichtungsanordnung mit einer Dichtungseinheit. In vielen Anwendungsbereichen werden in der Praxis Dichtungsanordnungen mit einem einfachen Dichtungsring oder einer einfachen Dichtscheibe mit einer oftmals nur unzureichenden Dichtwirkung eingesetzt. Derlei Dichtungsanordnungen finden sich häufig bei Fahrrädern, Elektro-Fahrrädern (= E-Bikes), sogenannten Pedelecs, Elektrowerkzeugen, landwirtschaftlichen Geräten, aber auch bei Armaturen in Sanitäranwendungen, Lebensmittelanwendungen, Kältemaschinen, Lenkungen und Kleingetrieben usw..

Die Dichtungseinheiten sind auf der Welle angeordnet und stützen sich mit ihrem radial äußeren Randbereich am Gehäuse ab. Ein ausreichend große dynamisch dichtende Kontaktpressung der Dichtungseinheiten gegen die betreffende Dichtfläche des Gehäuses ist dabei oftmals nur bedingt gegeben. Darüber hinaus ist häufig auch der statische Dichtsitz der Dichtungseinheit auf der Welle nur wenig zufriedenstellend. Dadurch können Verunreinigungen wie Wasser oder auch Schmutzpartikel vereinfacht in das Gehäuse eindringen und dort zu funktionellen Beeinträchtigungen sowie zu einem erhöhten Verschleiß von zur Lagerung der Welle eingesetzten Lagerteile führen.

Aus US 2003/0006113 A1 und US 2015/0192196 A1 sind Riemenscheibeneinheiten für kurbelwellengetriebene Hilfsmaschinen eines Kraftfahrzeugmotors bekannt. Die Riemenscheibeneinheiten weisen eine Dichtungsanordnung zum Abdichten eines Dichtspalts zwischen einer Riemenscheibe und einem Wellenkörper auf.

Aus US 2003/0156772 A1 ist ein Wasserpumpenlager mit einer Dichtungsstruktur bekannt. Die Dichtungsstruktur umfasst eine ringförmige erste und zweite Dichtungseinheit, die jeweils einen Dichtungsspalt zwischen einer Pumpenwelle und einem Außenring abdichten.

Aus EP 0 789 152 A2 ist ein Wälzlager bekannt, bei dem eine Dichtungsvorring den Spalt zwischen einem Außenring und einem Innenring des Wälzlagers abdichtet.

Aus DE 10 2012 202 910 A1 ist eine Dichtungsanordnung zur Abdichtung von zwei Bauteilen mit einem Dichtungskörper und einer Dichtungslippe bekannt, wobei der Dichtungskörper an einem ersten Bauteil angeordnet ist und die Dichtlippe dichtend an einem zweiten Bauteil anliegt.

Es ist deshalb die Aufgabe der Erfindung, eine Dichtungsanordnung mit einer Dichtungseinheit anzugeben, die bei kompakter Bauweise ein verbessertes Dichtvermögen aufweist und die möglichst einfach zu montieren und zu demontieren ist.

Die Erfindung betreffende Aufgabe wird durch eine Dichtungsanordnung mit den in Anspruch 1 angegebenen Merkmalen gelöst. Weiterbildungen der Erfindung sind in den Unteransprüchen sowie in der Beschreibung angegeben.

Die erfindungsgemäße Dichtungsanordnung ist insbesondere für ein Fahrrad, ein Elektrofahrrad, Elektrowerkzeuge, landwirtschaftliche Geräte, aber auch für Armaturen in Sanitäranwendungen, Lebensmittelanwendungen, Kältemaschinen, Lenkungen, Kleingetriebe und dergleichen geeignet. Die Dichtungsanordnung umfasst ein Gehäuse und eine Welle, die im Gehäuse um eine Rotationsachse rotierbar gelagert ist. Zur Abdichtung eines zwischen dem Gehäuse und der Welle ausgebildeten Dichtspalts gegenüber der Außenseite der Dichtungsanordnung dient eine Dichtungseinheit mit einem Dichtungsring und mit einem im elastisch verformbaren Material des Dichtungsrings zumindest abschnittsweise eingebettet angeordneten Spannring. Der Dichtungsring und der Spannring bilden dadurch eine gemeinsam handhabbare Bau- bzw. Montageeinheit. Die Dichtungseinheit kann mit einer besonders kompakten Bautiefe realisiert werden. Der Dichtungsring weist einen Halteabschnitt und eine Dichtlippe auf, die sich vom Halteabschnitt in einer radialen Richtung nach außen wegerstreckt und welche in einer zur Rotationsachse axialen Richtung an einer Dichtfläche des Gehäuses dynamisch dichtend anliegt. Durch den in einer radialen Richtung innenspannend ausgeführten Spannring ist eine axiale Lagesicherung des Halteabschnitts des Dichtungsrings in der Haltenut der Welle sowie eine umlaufend vorgespannte und statisch dichtende Anlage des Halteabschnitts an der Welle bewirkt. Die Dichtungseinheit kann dadurch drehfest an der Welle gesichert sein. Die Dichtungseinheit erlaubt dadurch eine zuverlässige statische sowie dynamische Abdichtung des Dichtspalts, so dass einem unerwünschten Eindringen von Wasser oder Verunreinigungen in den Dichtspalt zuverlässiger entgegengewirkt wird, als bei den eingangs genannten Dichtungseinheiten. Selbst höhergradige Schutzgrade, etwa gegenüber Hochdruck-/Dampfstrahlreinigung können erreicht werden. Insgesamt können dadurch Lagerteile der Welle, beispielsweise das Innenlager der Tretkurbelwelle eines Fahrrads/Pedelecs, zuverlässig vor einem übermäßigen Verschleiß, Fehlfunktionen oder sogar vor einer verschmutzungsbedingten Zerstörung geschützt werden. Aufgrund des zumindest abschnittsweise in den Dichtungsring integrierten Spannrings kann die Dichtungseinheit darüber hinaus vereinfacht demontiert und für Wartungsarbeiten bzw. bei einem Verschleiß ausgetauscht werden. Durch die axiale Festlegung des Dichtungsrings in der Haltenut der Welle kann darüber hinaus eine ausreichend große Kontaktpressung der Dichtlippe am Gehäuse und damit dauerhaft ein wirksames dynamisches Dichtvermögen der Dichtungseinheit gewährleistet werden.

Gemäß der Erfindung weist der Halteabschnitt des Dichtungsrings innenumfangsseitig einen umlaufenden Dichtflansch auf, der in die Haltenut eingreift. Durch einen solchen Dichtflansch kann ein besonders zuverlässiges statisches Dichtvermögen der Dichtungseinheit an der Welle gewährleistet werden. Der Halteflansch kann seinerseits in radialer und/oder in axialer Richtung an den Seitenflanken bzw. dem Nutgrund der Haltenut statisch dichtend anliegen.

Nach einer bevorzugten Weiterbildung der Erfindung greift der Spannring zumindest abschnittsweise in einer radialen Richtung in die Haltenut ein. Dadurch kann der Dichtungsring bzw. die gesamte Dichtungseinheit relativ zur Welle besonders zuverlässig an einer vorgegebenen axialen Position (bezogen auf deren Rotationsachse) und gegenüber angreifenden Momenten gesichert werden.

Der Spannring besteht nach einer bevorzugten Ausführungsform der Erfindung aus einem Polymerwerkstoff. Dies bietet fertigungstechnische Vorteile. Darüber hinaus kann dadurch einer unerwünschten elektrochemischen Korrosion im Bereich des Gehäuses entgegengewirkt und die Dichtungseinheit mit besonders geringer Masse bereitgestellt werden. Alternativ kann der Spannring aber auch aus Metall bestehen, wodurch eine besonders große Haltbarkeit und Belastbarkeit des Spannrings gewährleistet werden kann. Darüber hinaus kann bei der Fertigung der Dichtungseinheit ggf. auf standardisierte Spannringe zurückgegriffen werden, was Kostenvorteile bietet.

Nach einer Ausführungsform weist die Dichtungseinheit bzw. der Spannring mehrere Werkzeugeingriffe bzw. Werkzeugeingriffsausnehmungen auf. Die Werkzeug-eingriffe sind vorzugsweise von der Außenseite der Dichtungseinheit her mit einem Werkzeug (zerstörungsfrei) zugänglich. Die Werkzeugeingriffe ermöglichen vorzugsweise ein Aufweiten des Spannrings bzw. der gesamten Dichtungseinheit und erlauben so eine vereinfachte Montage bzw. Demontage der Dichtungseinheit.

Die Werkzeugeingriffe können nach einer Bauart zumindest teilweise in Form von (axialen) Durchgangsausnehmungen des Spannrings ausgeführt sein. Bei dieser Bauart überdeckt der Dichtungsring die Werkzeugeingriffe des Spannrings vorzugsweise außenseitig in axialer Richtung dichtend. Der Dichtungsring kann dazu nach einer bevorzugten Weiterbildung der Erfindung ein oder mehrere lösbar am übrigen Dichtungsring angeordnete Verschlusselemente aufweisen. Jedes Verschlusselement kann sich durch jeweils einen der Werkzeugeingriffe hindurcherstrecken und in diesem im Presssitz und dichtend gehalten angeordnet sein. Dadurch kann eine besonders zuverlässige Selbstsicherung des jeweiligen Verschlusselements am Spannring ermöglicht werden. Es versteht sich, dass jedes der Verschlusselemente auch am übrigen Dichtungsring befestigt, beispielsweise festgeklebt, sein kann. Jedes Verschlusselement bestehen bevorzugt aus dem gleichen Material wie der übrige Dichtungsring. Mehrere der Verschlusselemente oder alle Verschlusselemente können einstückig miteinander ausgeführt sein. Dies bietet fertigungstechnische Vorteile und vereinfacht die Handhabung.

Der Spannring kann nach der Erfindung mehr als zwei Werkzeugeingriffe aufweisen. Nach einer besonders bevorzugten Weiterbildung der Erfindung ist ein Teil der Werkzeugeingriffe des Spannrings in Umfangsrichtung des Spannrings, bevorzugt regelmäßig voneinander beabstandet, hintereinander aufgereiht angeordnet. Dadurch wird ein besonders variabler Werkzeugzugriff am Spannring ermöglicht. Die Montage/Demontage der Dichtungseinheit kann dadurch nochmals weiter vereinfacht werden. Zumindest ein Teil der Werkzeugeingriffe kann in seiner Formgebung und/oder Größe auf den Eingriff eines definierten Klingenprofils eines Werkzeugs, insbesondere eines Schraubendrehers, abgestimmt sein.

Gemäß einer ganz besonders bevorzugten Weiterbildung der Erfindung ist zumindest ein Teil der Werkzeugeingriffe des Spannrings in Form eines Sacklochs ausgeführt. Dadurch erübrigt sich eine Abdichtung dieser Werkzeugeingriffe durch das Material des Dichtungsrings. Dadurch kann die Dichtungseinrichtung besonders kostengünstig und mit kompakter Bautiefe realisiert werden. Der Spannring bedarf an dieser Stelle keiner dichtenden axialen Überdeckung durch das Material des Dichtrings.

Der Spannring kann nach einer Ausführungsform der Erfindung in radialer Richtung geschlitzt ausgeführt sein. Der Spannring ist somit in Umfangsrichtung nicht vollständig geschlossen. In diesem Fall kann der Spannring an seinen beiden freien Endabschnitten jeweils eine der vorstehend erläuterten Werkzeugeingriffe, insbesondere in Form eines (sogenannten) Auges, aufweisen. Dies ist insbesondere bei einem aus Metall gefertigten Spannring vorteilhaft.

Nach einer alternativen Ausführungsform der Erfindung weist der Halteabschnitt innenumfangsseitig zumindest bereichsweise einen gezahnten Randabschnitt auf, der in die Haltenut eingreift. Dadurch kann die Montage und Demontage der Dichtungseinheit erleichtert und der Dichtungsring mit einem verringerten Materialeinsatz realisiert werden. Zugleich kann der gezahnte Randabschnitt taschenartige Werkzeugeingriffe definieren. Diese Werkzeugeingriffe sind aus Abdichtungsgründen vorzugsweise in axialer Richtung von einem umlaufenden (filigranen) Dichtbund bzw. einem Dichtflansch des Halteabschnitts begrenzt. Der Dichtbund/-flansch kann zumindest abschnittsweise die Rückseite der Dichtungseinheit bilden. Der Dichtbund bzw. Dichtflansch kann an der innenseitigen Nutflanke der Haltenut in axialer Richtung dichtend anliegen.

Nach einer besonders bevorzugten Ausführungsform stützt sich der Halteabschnitt des Dichtungsrings in einer Stützzone außerhalb der Haltenut an der Mantelfläche der Welle, bevorzugt umlaufend dichtend, ab. Mit anderen Worten erstreckt sich der Halteabschnitt aus der Haltenut in einer zur Rotationsachse der Welle axialen Richtung von der Haltenut nach außen weg und umgreift die Welle kontaktierend. Dadurch kann der Halteabschnitt einerseits größere Momente aufnehmen, ohne übermäßig verformt oder aus der Haltenut herausgehebelt zu werden. Insgesamt kann dadurch bei geringer Bautiefe der Dichtungseinheit eine besonders große dynamische Kontaktpressung der Dichtlippe am Gehäuse realisiert werden. Darüber hinaus kann eine weitere statische Dichtzone bzw. statische Dichtebene zwischen dem Dichtungsring und der Welle außerhalb der Haltenut realisiert werden. Insgesamt kommt dies der Dichtfunktion der Dichtungseinheit zugute.

Ist die vorgenannte Stützzone des Halteabschnitts des Dichtungsrings bezüglich der dynamischen Dichtebene der Dichtlippe in einer axialen Richtung nach außen versetzt angeordnet, so kann der Halteabschnitt des Dichtungsrings besonders große Momente aufnehmen.

Weiter kann der Spannring erfindungsgemäß erste und zweite Ringsegmente aufweisen, die in Umfangsrichtung des Spannrings wechselweise hintereinanderliegend angeordnet sind, wobei die ersten Ringsegmente, die weniger elastisch verformbar sind, als die zweiten Ringsegmente, über die zweiten Ringsegmente miteinander verbunden sind. Diese Bauart ist insbesondere bei einem Polymer-Federring von Vorteil. Durch die zweiten Ringsegmente wird ein elastisches Aufweiten des Spannrings ermöglicht, wie dies für die Montage und ggf. auch Demontage der Dichtungseinheit erforderlich ist.

Die vorgenannten Werkzeugeingriffe des Spannrings können vorteilhaft jeweils durch eines der ersten Ringsegmente ausgebildet sein.

Der Dichtungsring ist dem Spannring erfindungsgemäß vorzugsweise angespritzt. Dies ermöglicht eine besonders kostengünstige Massenproduktion der Dichtungseinrichtung. Der Spannring kann nach der Erfindung seinerseits insbesondere als ein Spritzgussteil, als ein Stanzteil oder auch als ein 3D-Druckteil ausgeführt sein.

Weitere Vorteile der Erfindung ergeben sich aus der Beschreibung und der Zeichnung. Die Erfindung ist nachfolgend anhand von in der Zeichnung wiedergegebenen Ausführungsbeispielen näher erläutert. Die gezeigten und beschriebenen Ausführungsformen sind nicht als abschließende Aufzählung zu verstehen, sondern haben vielmehr beispielhaften Charakter für die Schilderung der Erfindung. In der Zeichnung zeigen:
- Fig. 1: eine Dichtungseinrichtung mit einem Gehäuse und mit einer darin rotierbar angeordneten Welle, hier beispielhaft in Form einer Tretlagerdichtungseinrichtung, mit einer an der Welle befestigten Tretkurbel, wobei eine Dichtungseinheit zum Abdichten eines zwischen der Welle und dem Gehäuse ausgebildeten Lager- bzw. Dichtspalts dient, in einer ausschnittsweisen Schnittdarstellung;
- Fig. 2: eine zur Dichtungseinheit gemäß Fig. 1 ähnliche Dichtungseinheit in einer freigestellten perspektivischen Ansicht;
- Fig. 3: die Dichtungseinheit gemäß Fig. 2 in einer ersten Schnittdarstellung;
- Fig. 4: eine Dichtungsanordnung mit der Dichtungseinheit gemäß Fig. 2 in einer Schnittdarstellung;
- Fig. 5: ein weiteres Ausführungsbeispiel der Dichtungseinheit, in einer perspektivischen Ansicht der Vorderseite;
- Fig. 6: eine zur Dichtungseinheit gemäß Fig. 5 ähnliche Dichtungseinheit in einem Detailausschnitt;
- Fig. 7: ein weiteres Ausführungsbeispiel einer Dichtungseinheit mit einem metallischen Spannring und mit randseitigen Werkzeugeingriffen, in einer vorderseitigen perspektivischen Ansicht;
- Fig. 8: die Dichtungseinheit gemäß Fig. 7 in einer rückseitigen Ansicht;
- Fig. 9: eine Dichtungseinheit mit einem als Sprengring ausgeführten Spannring, in einer rückseitigen Ansicht;
- Fig. 10: die Dichtungseinheit gemäß Fig. 9 mit einem einteiligen Verschlusselement zum dichtenden Verschließen der Werkzeugeingriffe des Spannrings, in einer vorderseitigen Ansicht; und
- Fig. 11: die Dichtungseinheit gemäß Fig. 9 in einer Schnittdarstellung der in Fig. 9 mit A-A bezeichneten Schnittebene.

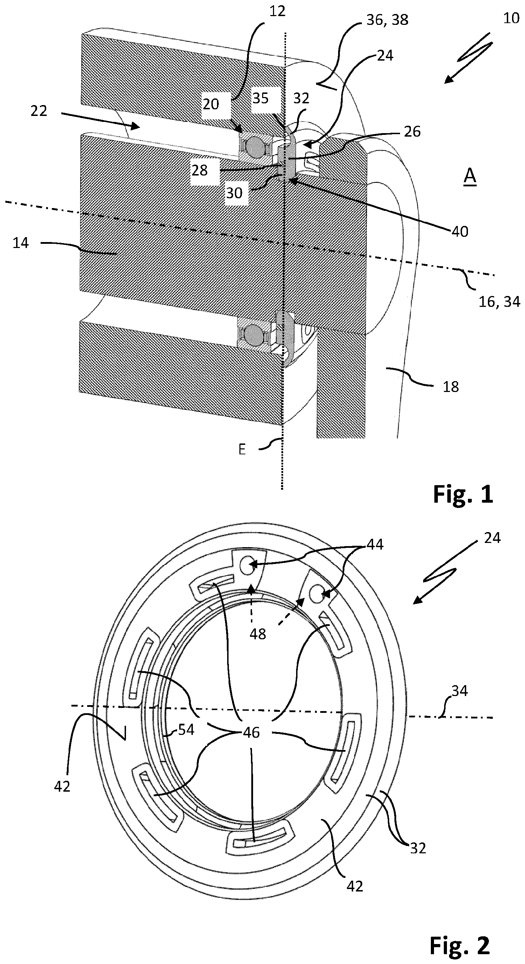

**Fig. 1** zeigt eine Dichtungsanordnung **10,** hier rein beispielhaft in Form einer Tretlagerdichtungsanordnung für ein Fahrrad, ein Pedelec und dergleichen. Die Dichtungsanordnung 10 umfasst ein Gehäuse **12** und eine Welle **14,** die sich hier durch das Gehäuse 12 hindurcherstreckt und welche im Gehäuse 12 um eine Rotationsachse **16** rotierbar gelagert ist. An der Welle 14 kann beidenends eine an sich bekannte Tretkurbel **18** befestigt sein. Zur Lagerung der Welle 14 dienen hier zumindest zwei Innenlager **20,** von denen in Fig. 1 aus Darstellungsgründen nur eines gezeigt ist. Die Einzelbauteile der Innenlager 20 können jeweils als eine untrennbare Einheit ausgeführt sein. Die Innenlager 20 können auch in an sich bekannter Weise als ein sogenanntes Patronenlager ausgeführt sein. Zur Abdichtung eines zwischen dem Gehäuse 12 und der Welle 14 ausgebildeten Dichtspalts **22** gegenüber der Außen- oder Schmutzseite **A** der Dichtungsanordnung 10 dient eine insgesamt mit **24** bezeichnete Dichtungseinheit. Die Dichtungseinheit 24 umfasst einen Dichtungsring **26** und einen Spannring **28.** Der Dichtungsring 26 besteht aus einem elastisch, bevorzugt gummielastisch, verformbaren Grundmaterial. Als Grundmaterial eignet sich insbesondere ein Elastomer. Der Dichtungsring 26 weist einen Halteabschnitt **30** und eine Dichtlippe **32** auf, die sich vom Halteabschnitt 30 in einer zur Mittelachse **34** des Dichtungsrings 26 bzw. der Dichtungseinheit 24 radialen Richtung nach außen wegerstreckt. Die Dichtlippe weist eine Dichtkante **35** auf. Die Mittelachse 34 des Dichtungsrings 26 fällt mit der Rotationsachse 16 zusammen. Die Dichtlippe 32 liegt aufgrund der ihrem Grundmaterial innewohnenden Eigenelastizität an einer Dichtfläche **36** des Gehäuses 12 im Bereich einer dynamischen Dichtebene **E** in axialer Richtung dynamisch dichtend an. Die Dichtfläche 36 kann gemäß Fig. 1 insbesondere durch die Stirnfläche **38** des Gehäuses 12 gebildet sein.

Der Spannring 28 dient einer axialen Festlegung des Halteabschnitts 30 des Dichtungsrings 26 in einer Haltenut **40** der Welle 14 und gewährleistet eine in radialer Richtung vorgespannte und umlaufend statisch dichtende Anlage des Halteabschnitts 30 des Dichtungsrings 26 an der Welle 14.

Das elastisch verformbare Grundmaterial des Dichtungsrings 26 kann dem Spannring 28 beispielsweise angespritzt sein.

In den **Figuren 2** bis **4** ist eine Dichtungseinheit 24 gezeigt, die der Dichtungseinheit 24 gemäß Fig. 1 weitgehend entspricht.

Die Dichtungseinheit 24 weist an ihrer im Montagezustand zur Außenseite (A, vgl. Fig. 1) weisenden Vorderseite **42** mehrere Werkzeugeingriffe **44, 46** auf. Die Werkzeugeingriffe 44, 46 sind hier jeweils durch den Spannring 28 gebildet. Die Werkzeugeingriffe 44, 46 sind hier jeweils als zur Vorderseite 42 hin offene Sacklochausnehmungen ausgeführt.

Erste Werkzeugeingriffe 44 dienen dem Eingriff einer Spannringzange oder dergleichen, mit deren Hilfe der Spannring 28 zur Montage/Demontage der Dichtungseinheit 24 aufweitbar ist. Der Spannring 28 ist hier in Umfangsrichtung geschlossen ausgeführt, kann jedoch nach einer alternativen Bauart auch in radialer Richtung geschlitzt ausgeführt sein. In diesem Fall weist der Spannring 28 (in Umfangsrichtung) zwei einander zuweisende freie Endabschnitte **48** auf. Die Endabschnitte 48 sind dann vorzugsweise mit den ersten Werkzeugeingriffen 44 versehen.

Zweite Werkzeugeingriffe 46 sind in Umfangsrichtung des Spannrings 28 regelmäßig voneinander beabstandet hintereinander aufgereiht angeordnet. Diese zweiten Werkzeugeingriffe 46 können insbesondere einen rechteckigen Öffnungsquerschnitt aufweisen und dem Eingriff einer Werkzeugklinge, beispielsweise eines Schraubendrehers (nicht gezeigt), dienen. Mithilfe dieser zweiten Werkzeugeingriffe 46 kann die Dichtungseinheit 24 ohne Spezialwerkzeug - jedoch ggf. zerstörend - aus ihrer Montageposition in der Haltenut 40 (Fig. 1) herausgehebelt werden.

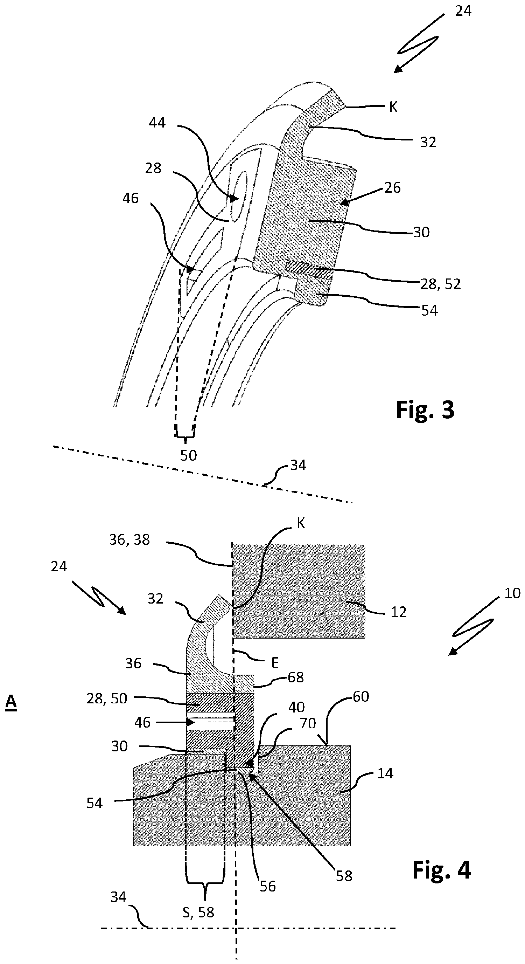

Der Spannring 28 weist gemäß den **Fign. 3** und **4** erste und zweite Ringsegmente **50, 52** auf, die in Umfangsrichtung des Spannrings 28 wechselweise hintereinanderliegend angeordnet sind. Die ersten Ringsegmente 50 bilden hier jeweils einen der Werkzeugeingriffe 44, 46 und sind in radialer Richtung weniger elastisch verformbar, als die zweiten Ringsegmente 52, über die die ersten Ringsegmente miteinander flexibel verbunden sind. Dadurch kann die Montage der Dichtungseinheit 24 durch gemeinsames Aufspreizen und axiales Aufschieben des Dichtungsrings 26 und des Spannrings 28 auf die Welle (14, Fig. 1) vereinfacht werden.

Der Spannring 28 besteht aus einem Material mit einem größeren Modul, hier einem Polymerwerkstoff, als das Material des Dichtungsrings 26. Der Spannring 28 kann als ein Spritzgussteil oder auch als ein 3D-Druckteil ausgeführt sein.

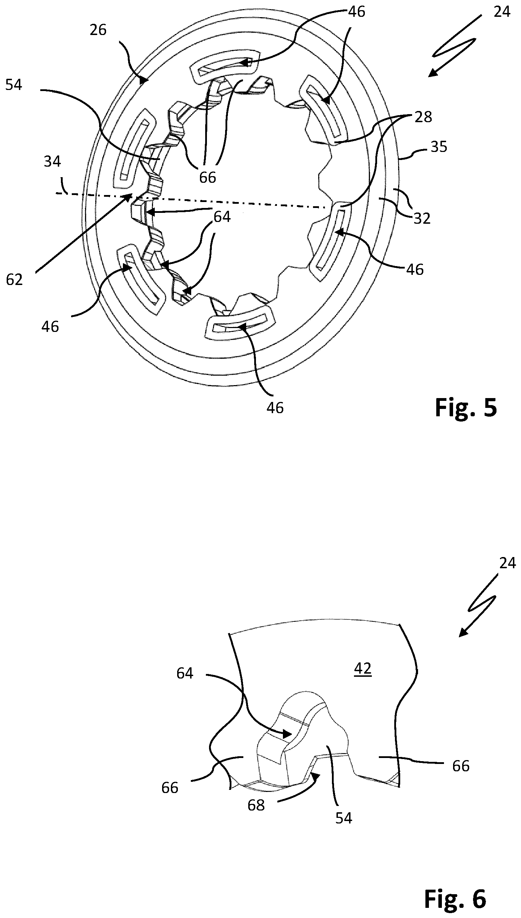

Der Halteabschnitt der in den Fig. 2 bis 4 gezeigten Dichtungseinheit 24 weist gemäß den Fign. 3 und 4 einen innenumfangsseitigen Montage- und Dichtflansch **54** auf, der sich vom übrigen Halteabschnitt 30 radial in Richtung der Mittelachse 34 wegerstreckt. Der Dichtflansch 54 kann eine rechteckige Querschnittsform und vorzugsweise einen kreisrunden Innenquerschnitt bzw. eine kreisrunde Innenkontur aufweisen. Der Dichtflansch 54 greift im Montagezustand der Dichtungseinheit 24 über den gesamten Umfang des Dichtungsrings 26 in die Haltenut 40 (Fig. 4) dichtend ein. Der Dichtflansch 54 liegt dabei am Nutgrund **56** der Haltenut 40 in einer radialen Richtung statisch dichtend an. Dadurch ist eine erste statische Dichtzone **58** zwischen der Welle 14 und der Dichtungseinheit 24 gebildet. Zu beachten ist, dass der Spannring 28 in Umfangsrichtung nur intermittierend, d.h. segmentweise, in die Haltenut 40 eingreifen kann, wie dies aus den Fign. 4 und 5 hervorgeht. Besonders vorteilhaft greift der Spannring 28 dabei zumindest mit seinen ersten Ringsegmenten 50 in die Haltenut 40 ein.

Gemäß Fig. 4 erstreckt sich die Dichtungseinheit 24 von der Haltenut 40 in axialer Richtung zur Außenseite A hin weg. Der Halteabschnitt 30 stützt sich in einer Stützzone **S** außerhalb der Haltenut 40 an der Mantelfläche **60** der Welle 14 vollumfänglich in einer radialen Richtung ab. Dies ermöglicht einerseits eine ausreichende Kontaktpressung zwischen der Dichtlippe 32 und der Dichtfläche 36 des Gehäuses 12. Darüber hinaus ist bei umlaufender dichtender Anlage des Halteabschnitts 30 an der Welle 14 eine weitere statische Dichtzone 58 zwischen der Welle 14 und der Dichtungseinheit 24 gebildet. Der Dichtungsring 26 liegt mithin im Bereich zumindest zweier voneinander axial beabstandeter Dichtzonen 58 an der Welle 14 statisch dichtend an.

Die Dichtungseinheit 24 kann gemäß Fig. 4 durchaus mit einem axialen Spiel in der Haltenut 40 angeordnet sein, wodurch die Montage der Dichtungseinheit 24 erleichtert und möglichen Beschädigungen des Halteabschnitts 30 entgegengewirkt wird.

**Fig. 5** zeigt eine weitere Dichtungseinheit 24, die sich von den vorstehend erläuterten Dichtungseinheiten 24 im Wesentlichen dadurch unterscheidet, dass der Halteabschnitt 30 des Dichtungsrings 26 innenumfangsseitig einen gezahnten Randabschnitt **62** mit taschenartigen dritten Werkzeugeingriffen **64** aufweist. Die dritten Werkzeugeingriffe 64 sind in Umfangsrichtung voneinander beabstandet hintereinander aufgereiht angeordnet und jeweils beiderseitig durch einen Zahn **66** des Randabschnitts 62 begrenzt. Die Zähne 66 stehen vom übrigen Halteabschnitt 30 radial in Richtung auf die Mittelachse 34 vor.

Gemäß **Fig. 6** können die dritten Werkzeugeingriffe 64 axial in Richtung der Rückseite **68** der Dichtungseinheit 24 jeweils durch einen innenumfangsseitigen Dichtflansch 54 des Dichtungsrings 26 begrenzt sein. Der Halteabschnitt 30 greift im Einbauzustand der Dichtungseinheit 24 mit seinen randseitigen Zähnen 66 in die Haltenut 40 (Fign. 1 und 4) ein, während die statische Dichtwirkung des Halteabschnitts 30 innerhalb der Haltenut 40 durch den (filigranen) Dichtflansch 54 erreicht wird. Dieser liegt an der innenseitigen Nutflanke **70** der Haltenut 40 in axialer Richtung umlaufend dichtend an. Die weiter zentral angeordneten dritten Werkzeugeingriffe 64 erlauben ein nochmals effektiveres Aufweiten der Dichtungseinheit 24 für deren Montage bzw. ein weiter vereinfachtes Heraushebeln aus der Haltenut 40 der Welle 14.

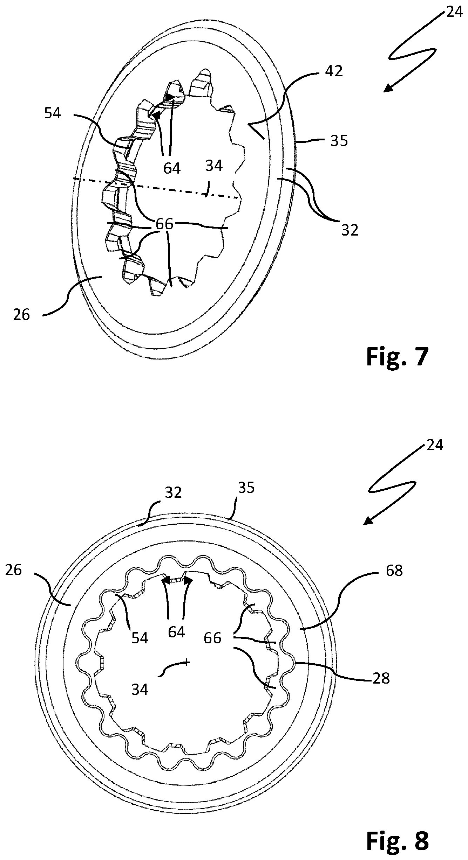

Der Spannring 28 der Dichtungseinheit 24 kann gemäß dem in den **Fign. 7** und **8** gezeigten Ausführungsbeispiel der Dichtungseinheit 24 auch aus Metall bestehen. Hier ist der Spannring 28 beispielhaft als ein ungeschlitzter (= vollumfänglich geschlossener) Wellenring ausgeführt, der zumindest teilweise im Material des Dichtungsrings 26 eingebettet gehalten angeordnet ist. Der Spannring 28 ist vorderseitig (im Einbauzustand zur Außenseite A hin) vom elastisch verformbaren Material des Dichtungsrings 26 vollständig überdeckt, um ein zuverlässiges Dichtvermögen der Dichtungseinheit 24 zu gewährleisten. Die Dichtungseinheit 24 ist hier rein beispielhaft mit den vorstehend im Zusammenhang mit den Fign. 5 und 6 erläuterten taschenartigen dritten Werkzeugeingriffen 64 versehen. Zu beachten ist, dass die Dichtungseinheit auch bei metallischem Spannring zusätzlich oder alternativ zu den dritten Werkzeugeingriffen 64 mehrere der vorstehend erläuterten ersten bzw. zweiten Werkzeugeingriffe 44, 46 aufweisen kann.

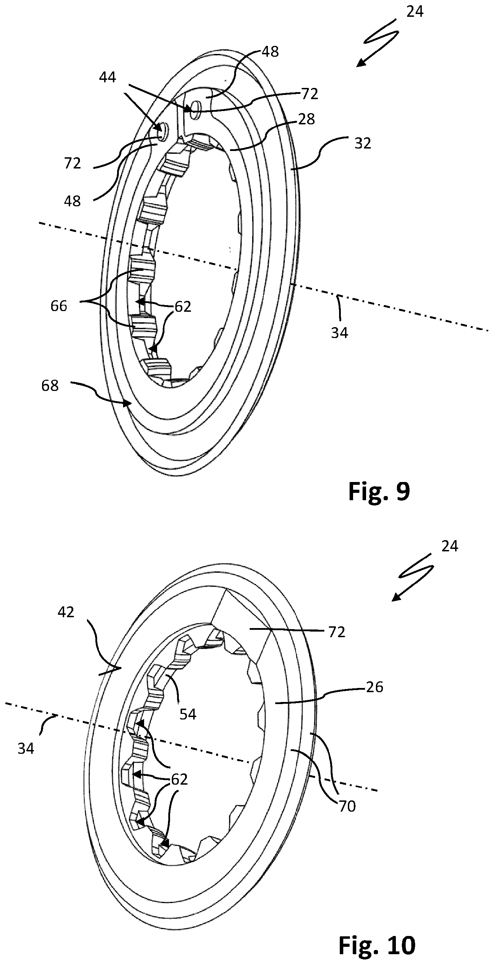

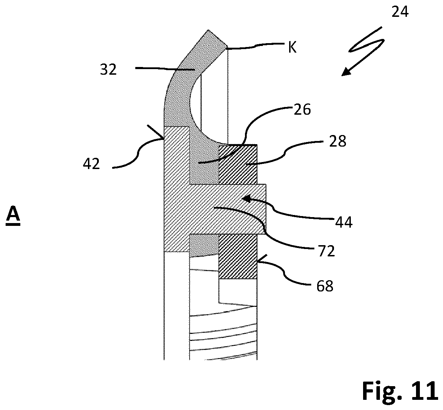

Gemäß der in den **Fig. 9** bis **11** gezeigten Dichtungseinheit 24 kann der Spannring 28 alternativ auch in Form eines (geschlitzten) Sprengrings aus Metall ausgeführt sein, der in das Material des Dichtungsrings zumindest teilweise eingebettet ist. Die beiden freien Endabschnitte 48 des Spannrings 28 sind jeweils mit einem ersten Werkzeugeingriff 44, hier in Form eines Auges, zur Aufnahme einer Spannzange (nicht gezeigt), ausgeführt. Der Spannring 28 ist an der Rückseite 68 der Dichtungseinheit 24 angeordnet. Aus Abdichtungsgründen ist der Spannring 28 in einer axialen Richtung vorderseitig vollständig vom Material des Dichtungsrings 26 überdeckt. Der Dichtungsring 26 kann ein oder mehrere Stopfen oder Verschlusselemente **72** umfassen, die sich jeweils von der Vorderseite 42 der Dichtungseinheit 24 her in die beiden Augen des Spannrings 28 hineinerstrecken und diese fluid- und partikeldicht verschließen. Es versteht sich, dass der Dichtungsring jeweils in der Zeichnung nicht näher dargestellte Durchgangsausnehmungen für die Verschlusselemente 72 aufweist, die zu den ersten Werkzeugeingriffen 44 axial fluchtend angeordnet sind. Die Verschlusselemente 72 können bedarfsweise am übrigen Dichtungsring 26 festgeklebt sein. Alternativ oder zusätzlich kann jedes Verschlusselement 72 in den ersten Werkzeugeingriffen 44 des Spannrings 28 im Presssitz gehalten angeordnet sein, wie dies in der Schnittdarstellung gemäß Fig. 11 entlang der in Fig. 9 gezeigten Schnittebene A-A gezeigt ist. Die Verschlusselemente 72 können einstückig miteinander ausgeführt sein.

Der Dichtungsring 26 kann am Halteabschnitt 30 einen umlaufenden Dichtflansch 54 gemäß dem Ausführungsbeispiel gemäß den Fign. 2 bis 4 oder auch einen gezahnten Halteabschnitt mit einem filigranen Dichtflansch 54 (vgl. Fign. 7 - 10) aufweisen.

## Patentansprüche

1. Dichtungsanordnung (10), umfassend ein Gehäuse (12) und eine Welle (14), die im Gehäuse (12) um eine Rotationsachse (16) rotierbar gelagert ist, sowie eine Dichtungseinheit (24) zum Abdichten eines zwischen dem Gehäuse (12) und der Welle (14) ausgebildeten Dichtspalts (22) gegenüber der Außenseite A des Gehäuses (12),
wobei die Dichtungseinheit (24) umfasst:
• einen Dichtungsring (26) mit einem Halteabschnitt (30) und mit einer Dichtlippe (32), die sich vom Halteabschnitt (30) in einer radialen Richtung nach außen wegerstreckt und welche an einer Dichtfläche (36) des Gehäuses (12) in axialer Richtung dynamisch dichtend anliegt; und
• einen innenspannenden (28) Spannring, der im Material des Dichtungsrings (26) eingebettet angeordnet ist und durch den eine axiale Lagesicherung des Halteabschnitts (30) in einer Haltenut (40) sowie eine umlaufend vorgespannte statisch dichtende Anlage des Halteabschnitts (30) an der Welle (14) bewirkt ist;
wobei der Halteabschnitt (30) des Dichtungsrings (26) innenumfangsseitig einen umlaufenden Dichtflansch (54) aufweist, der in die Haltenut (40) eingreift **dadurch gekennzeichnet,**
**dass** der Spannring (28) mehrere Werkzeugeingriffe (44, 46, 64) aufweist, die von der Außenseite A her zugänglich sind.

2. Dichtungsanordnung (10) gemäß Anspruch 1, **dadurch gekennzeichnet, dass** der Spannring (28) zumindest abschnittsweise in einer radialen Richtung in die Haltenut (40) eingreift.

3. Dichtungsanordnung (10) gemäß Anspruch 1 oder 2, **dadurch gekennzeichnet, dass** der Spannring (28) aus einem Polymerwerkstoff oder aus Metall besteht.

4. Dichtungsanordnung (10) gemäß Anspruch 1, **dadurch gekennzeichnet, dass** der Spannring (28) geschlitzt ausgeführt ist und an seinen freien Endabschnitten (48) jeweils einen Werkzeugeingriff (44, 46, 64), insbesondere in Form eines Auges, aufweist.

5. Dichtungsanordnung (10) gemäß Anspruch 1 oder 4, **dadurch gekennzeichnet, dass** zumindest ein Teil der Werkzeugeingriffe (44,46, 64) in Umfangsrichtung des Spannrings (28), vorzugsweise regelmäßig voneinander beabstandet, hintereinander aufgereiht angeordnet sind.

6. Dichtungsanordnung (10) gemäß einem der Ansprüche 1 bis 5, **dadurch gekennzeichnet, dass** zumindest ein Teil der Werkzeugeingriffe (44, 46, 64) jeweils in Form eines zur Außenseite A hin offenen Sacklochs ausgeführt ist.

7. Dichtungsanordnung (10) gemäß einem der Ansprüche 1 bis 6, **dadurch gekennzeichnet, dass** zumindest ein Teil der Werkzeugeingriffe (44, 46, 64) als axiale Durchgangsausnehmungen des Spannrings (28) ausgeführt sind, die vom Dichtungsring (26) außenseitig in axialer Richtung vollständig dichtend überdeckt sind.

8. Dichtungsanordnung (10) gemäß Anspruch 7, **dadurch gekennzeichnet, dass** der Dichtungsring (10) lösbar angeordnete Verschlusselemente (72) zum Abdichten der Werkzeugeingriffe (44, 46, 64) aufweist, die mit dem übrigen Dichtungsring (26) verklebt, verschweißt oder im Presssitz am Dichtungsring (26) und/oder am Spannring (28) gehalten angeordnet sind.

9. Dichtungsanordnung gemäß Anspruch 8, **dadurch gekennzeichnet, dass** die Verschlusselemente (72) aus dem gleichen Werkstoff bestehen, wie der übrige Dichtungsring (26) und/oder die Verschlusselemente (72) gemeinsam einstückig ausgebildet sind.

10. Dichtungsanordnung (10) gemäß einem der vorhergehenden Ansprüche 1 bis 9, **dadurch gekennzeichnet, dass** der Halteabschnitt (30) des Dichtungsrings (26) einen gezahnten Randabschnitt (62) mit mehreren Werkzeugeingriffen (44, 46, 64) aufweist, die in Umfangsrichtung jeweils beiderseitig durch einen Zahn (66) des Randabschnitts (62) begrenzt sind.

11. Dichtungsanordnung (10) gemäß Anspruch 10, **dadurch gekennzeichnet, dass** zumindest ein Teil der Werkzeugeingriffe (44, 46, 64) in einer axialen Richtung durch einen umlaufenden Dichtflansch (54) des Halteabschnitts (30) begrenzt sind, wobei der Dichtflansch (54) vorzugsweise an einer innenseitigen Nutflanke (70) der Haltenut (40) dichtend anliegt.

12. Dichtungsanordnung (10) gemäß einem der vorhergehenden Ansprüche, **dadurch gekennzeichnet, dass** sich der Halteabschnitt (30) des Dichtungsrings (26) in einer Stützzone S außerhalb der Haltenut (40) in einer radialen Richtung, vorzugsweise umlaufend dichtend, an der Mantelfläche (60) der Welle (14) abstützt.

13. Dichtungsanordnung (10) gemäß Anspruch 12, **dadurch gekennzeichnet, dass** die Stützzone S in einer axialen Richtung relativ zur dynamischen Dichtebene E der Dichtlippe (32) nach außen versetzt angeordnet ist oder die dynamische Dichtebene E die Stützzone S schneidet.

14. Dichtungsanordnung (10) gemäß einem der vorhergehenden Ansprüche, **dadurch gekennzeichnet, dass** der Spannring (28) erste und zweite Ringsegmente (50, 52) aufweist, die in Umfangsrichtung wechselweise hintereinanderliegend angeordnet sind, wobei die ersten Ringsegmente (50) weniger elastisch verformbar sind, als die zweiten Ringsegmente (52), und wobei die ersten Ringsegmente (50) über die zweiten Ringsegmente (52) miteinander flexibel verbunden sind.

15. Dichtungsanordnung (10) gemäß Anspruch 1 i. V. m. Anspruch 14, **dadurch gekennzeichnet, dass** zumindest ein Teil der Werkzeugeingriffe (44, 46, 64) des Spannrings (28) jeweils durch eines der ersten Ringsegmente (50) ausgebildet sind.

## Claims

1. Sealing arrangement (10) comprising a housing (12) and a shaft (14) which is mounted in the housing (12) such that it can be rotated about an axis of rotation (16), and a sealing unit (24) for sealing a sealing gap (22) formed between the housing (12) and the shaft (14) with respect to the outside A of the housing (12),
wherein the sealing unit (24) comprises:
- a sealing ring (26) having a retaining section (30) and having a sealing lip (32) which extends outwardly away from the retaining section (30) in a radial direction and which dynamically sealingly rests against a sealing surface (36) of the housing (12) in an axial direction; and
- an internally tensioning clamping ring (28) which is arranged embedded in the material of the sealing ring (26) and secures the axial position of the retaining section (30) in a retaining groove (40) and ensures that the retaining section (30) is circumferentially pretensioned and statically sealingly rests against the shaft (14),
wherein the retaining section (30) of the sealing ring (26) has on the inner circumferential side a circumferential sealing flange (54) which engages in the retaining groove (40),
**characterized in that**
the clamping ring (28) has a plurality of tool engagements (44, 46, 64) which are accessible from the outside A.

2. Sealing arrangement (10) according to claim 1, **characterized in that** the clamping ring (28) engages in the retaining groove (40) at least in sections in a radial direction.

3. Sealing arrangement (10) according to claim 1 or 2, **characterized in that** the clamping ring (28) consists of a polymer material or of metal.

4. Sealing arrangement (10) according to claim 1, **characterized in that** the clamping ring (28) is slotted and has a respective tool engagement (44, 46, 64), in particular in the form of an eye, at its free end portions (48).

5. Sealing arrangement (10) according to claim 1 or 4, **characterized in that** at least a part of the tool engagements (44, 46, 64) is arranged in series in the circumferential direction of the clamping ring (28), preferably regularly spaced apart from one another.

6. Sealing arrangement (10) according to one of the claims 1 to 5, **characterized in that** at least a part of the tool engagements (44, 46, 64) is designed in each case in the form of a blind hole open towards the outside A.

7. Sealing arrangement (10) according to one of the claims 1 to 6, **characterized in that** at least a part of the tool engagements (44, 46, 64) is designed as axial through recesses of the clamping ring (28), which are covered on the outside in an axial direction by the sealing ring (26) such that they are completely sealed.

8. Sealing arrangement (10) according to claim 7, **characterized in that** the sealing ring (10) comprises detachably arranged closure elements (72) for sealing the tool engagements (44, 46, 64), which are glued or welded to the remaining sealing ring (26) or are held in press fit on the sealing ring (26) and/or on the clamping ring (28).

9. Sealing arrangement according to claim 8, **characterized in that** the closure elements (72) are made of the same material as the remaining sealing ring (26) and/or that the closure elements (72) are formed together in one piece.

10. Sealing arrangement (10) according to any one of the preceding claims 1 to 9, **characterized in that** the retaining section (30) of the sealing ring (26) has a toothed edge section (62) with a plurality of tool engagements (44, 46, 64), each of which is delimited in the circumferential direction on both sides by a tooth (66) of the edge section (62).

11. Sealing arrangement (10) according to claim 10, **characterized in that** at least a part of the tool engagements (44, 46, 64) is delimited in an axial direction by a circumferential sealing flange (54) of the retaining section (30), the sealing flange (54) preferably bearing in a sealing manner against an inner side groove flank (70) of the retaining groove (40).

12. Sealing arrangement (10) according to one of the preceding claims, **characterized in that** the retaining section (30) of the sealing ring (26) is supported in a supporting zone S outside the retaining groove (40) in a radial direction, preferably in a circumferentially sealing manner, against the lateral surface (60) of the shaft (14).

13. Sealing arrangement (10) according to claim 12, **characterized in that** the supporting zone S is arranged offset outwardly in an axial direction relative to the dynamic sealing plane E of the sealing lip (32) or that the dynamic sealing plane E intersects the supporting zone S.

14. Sealing arrangement (10) according to one of the preceding claims, **characterized in that** the clamping ring (28) has first and second ring segments (50, 52) which are arranged alternately one behind the other in the circumferential direction, the first ring segments (50) being less elastically deformable than the second ring segments (52), and the first ring segments (50) being flexibly connected to one another via the second ring segments (52).

15. Sealing arrangement (10) according to claim 1 in connection with claim 14, **characterized in that** at least a part of the tool engagements (44, 46, 64) of the clamping ring (28) is formed by one of the first ring segments (50) in each case.

## Revendications

1. Agencement d'étanchéité (10), comprenant une gaine (12) et un arbre (14), monté dans la gaine (12) de manière à pouvoir tourner autour d'un axe de rotation (16), et une unité d'étanchéité (24) permettant d'étanchéifier un interstice d'étanchéité (22) formé entre la gaine (12) et l'arbre (14) par rapport à la face extérieure A de la gaine (12),
l'unité d'étanchéité (24) comprenant :
• une bague d'étanchéité (26) avec une section de retenue (30) et une lèvre d'étanchéité (32) qui s'étend vers l'extérieur dans une direction radiale à partir de la section de retenue (30) et qui repose contre une surface d'étanchéité (36) de la gaine (12) de manière à assurer une étanchéité dynamique dans la direction axiale ; et
• une bague de serrage (28) qui assure un serrage par l'intérieur est noyée dans le matériau de la bague d'étanchéité (26) et produit un blocage axial de position de la section de retenue (30) dans une rainure de retenue (40) et un appui circonférentiel précontraint à étanchéité statique de la section de retenue (30) sur l'arbre (14) ;
la section de retenue (30) de la bague d'étanchéité (26) présentant du côté de la circonférence intérieure une bride d'étanchéité (54) circonférentielle qui vient en prise dans la rainure de retenue (40), **caractérisé en ce que** la bague de serrage (28) présente plusieurs orifices de mise en prise d'outil (44, 46, 64) qui sont accessibles depuis la face extérieure A.

2. Agencement d'étanchéité (10) selon la revendication 1, **caractérisé en ce que** la bague de serrage (28) vient en prise dans la rainure de retenue (40) au moins par sections dans une direction radiale.

3. Agencement d'étanchéité (10) selon la revendication 1 ou 2, **caractérisé en ce que** la bague de serrage (28) est en matériau polymère ou en métal.

4. Agencement d'étanchéité (10) selon la revendication 1, **caractérisé en ce que** la bague de serrage (28) est fendue et présente à chacune de ses sections d'extrémité (48) libres respectivement un orifice de mise en prise d'outil (44, 46, 64), en particulier en forme d'oeil.

5. Agencement d'étanchéité (10) selon la revendication 1 ou 4, **caractérisé en ce qu'**au moins une partie des orifices de mise en prise d'outil (44, 46, 64) sont agencés en rangées les uns derrière les autres dans la direction circonférentielle de la bague de serrage (28), de manière préférée de manière régulièrement espacée les uns par rapport aux autres.

6. Agencement d'étanchéité (10) selon l'une quelconque des revendications 1 à 5, **caractérisé en ce qu'**au moins une partie des orifices de mise en prise d'outil (44, 46, 64) sont réalisés respectivement sous la forme d'un trou borgne ouvert vers la face extérieure A.

7. Agencement d'étanchéité (10) selon l'une quelconque des revendications 1 à 6, **caractérisé en ce qu'**au moins une partie des orifices de mise en prise d'outil (44, 46, 64) sont réalisés sous la forme d'évidements axiaux traversants de la bague de serrage (28), qui sont recouverts du côté extérieur par la bague d'étanchéité (26) de manière à assurer une étanchéité complète dans la direction axiale.

8. Agencement d'étanchéité (10) selon la revendication 7, **caractérisé en ce que** la bague d'étanchéité (10) présente des éléments de fermeture (72) agencés de manière amovible, permettant d'étanchéifier les orifices de mise en prise d'outil (44, 46, 64), et qui sont agencés en étant collés ou soudés au reste de la bague d'étanchéité (26) ou en étant retenus en ajustement serré sur la bague d'étanchéité (26) et/ou sur la bague de serrage (28).

9. Agencement d'étanchéité selon la revendication 8, **caractérisé en ce que** les éléments de fermeture (72) sont constitués du même matériau que le reste de la bague d'étanchéité (26) et/ou les éléments de fermeture (72) sont réalisés d'un seul tenant.

10. Agencement d'étanchéité (10) selon l'une quelconque des revendications précédentes 1 à 9, **caractérisé en ce que** la section de retenue (30) de la bague d'étanchéité (26) présente une section de bord (62) dentée munie de plusieurs orifices de mise en prise d'outil (44, 46, 64) qui sont limités dans la direction circonférentielle respectivement des deux côtés par une dent (66) de la section de bord (62).

11. Agencement d'étanchéité (10) selon la revendication 10, **caractérisé en ce qu'**au moins une partie des orifices de mise en prise d'outil (44, 46, 64) sont limités dans une direction axiale par une bride d'étanchéité (54) circonférentielle de la section de retenue (30), la bride d'étanchéité (54) reposant de manière à assurer une étanchéité de manière préférée au niveau d'un flanc de rainure (70), situé du côté intérieur, de la rainure de retenue (40).

12. Agencement d'étanchéité (10) selon l'une quelconque des revendications précédentes, **caractérisé en ce que** la section de retenue (30) de la bague d'étanchéité (26) s'appuie sur la surface d'enveloppe (60) de l'arbre (14) dans une zone d'appui S à l'extérieur de la rainure de retenue (40) dans une direction radiale, de manière préférée de manière à assurer une étanchéité de manière circonférentielle.

13. Agencement d'étanchéité (10) selon la revendication 12, **caractérisé en ce que** la zone d'appui S est agencée de manière décalée vers l'extérieur dans une direction axiale par rapport au plan d'étanchéité dynamique E de la lèvre d'étanchéité (32), ou le plan d'étanchéité dynamique E coupe la zone d'appui S.

14. Agencement d'étanchéité (10) selon l'une quelconque des revendications précédentes, **caractérisé en ce que** la bague de serrage (28) présente des premier et second segments de bague (50, 52) qui sont agencés mutuellement l'un derrière l'autre dans la direction circonférentielle, les premiers segments de bague (50) étant moins déformables élastiquement que les seconds segments de bague (52), et les premiers segments de bague (50) étant reliés l'un à l'autre de manière flexible par l'intermédiaire des seconds segments de bague (52).

15. Agencement d'étanchéité (10) selon la revendication 1 en liaison avec la revendication 14, **caractérisé en ce qu'**au moins une partie des orifices de mise en prise d'outil (44, 46, 64) de la bague de serrage (28) sont réalisés respectivement grâce à un des premiers segments de bague (50).
